# EUROPEAN PATENT APPLICATION

(11) **EP 1 068 996 A2**
(43) Date of publication of application: **17.01.2001**
(21) Application number: 00305082.0
(22) Date of filing: 15.06.2000
(51) Int. Cl.: B60R 5/04, B62D 43/10

(54) **Cover for a vehicle storage compartment**

(30) Priority: 15.07.1999 GB 9916488
(71) Applicant: ROVER GROUP LIMITED, Warwick, Warwickshire CV34 6RG (GB)
(72) Inventor: Sanghera, Rashpal Singh, Warwick, CV34 6XB (GB); Douglas, Graham John York House, Kenilworth, Warks., CV8 2AH (GB)
(74) Representative: Parnham, Kevin

(57) **Abstract**

A storage space, for example a spare wheel well, to be covered for a motor vehicle interior is disclosed. A cover member 22 is moveable between a closed position and an opened position, in which access may be had to the storage space. Biasing means are provided to assist in moving the cover member 22 and supporting the cover member 22 in the opened position. This enables a user to have both hands free for moving items, such as a spare wheel, in and out of the storage space.

## Description

The present invention relates to an improved motor vehicle assembly. In particular, it relates to a cover for a motor vehicle interior storage space such as a spare wheel well or tool space.

It is a problem with known covers for such storage spaces, for example for spare wheel wells, that the covers may be heavy or bulky to move. In the case of a vehicle spare wheel well, it is necessary that the cover be of a certain thickness or bulk in order that noise or other vibration is not allowed to be transferred into a motor vehicle interior where such noise or other vibration may affect the quality of the driving experience of the occupants of a passenger cell of the motor vehicle. Also, in the case of a spare wheel well cover, the cover needs to have sufficient strength and integrity to support loads, such as luggage, placed on top of the cover.

Further, the cover must be removable from the spare wheel well, or at least movable to a position in which the spare wheel well is uncovered sufficiently to allow a tyre to be removed or introduced into the spare wheel well. However, the weight, thickness or bulk of the cover makes moving the cover to allow access to the spare wheel well a problem.

A proposed solution to this problem is to provide a retaining strap or the like by which the cover can be held away from the spare wheel well. However, it remains a problem that the cover needs to be manhandled to a position in which the cover can secured away from the spare wheel well by the retaining strap.

It is an advantage of the present invention that it eliminates, or at least substantially reduces, the problems identified above.

According to a first aspect of the present invention, A storage space for a motor vehicle interior, the storage space comprising a well (1) and a cover member (22), the cover member (22) being moveable between a closed position and an opened position relative to the well (1), in which access may be had to the storage space, the storage space being characterised in that biasing means (28) are provided to assist in moving the cover member (22) and to facilitate retention of the cover member (22) in the opened position, the biasing means (28) being biased towards the opened position whereby the bias means is in compression or tension whilst in the closed position.

The invention has as an advantage that the biasing means can be used to support the cover member in the opened position, as well as reducing the forces required to move the cover member between the closed and opened positions. A further advantage is that when removing or installing objects from or into the storage space, inadvertent contact with the cover will not dislodge the cover from the opened position causing it to drop onto the limbs or digits of the user.

Preferably the biasing means comprises at least one gas strut.

Preferably the biasing means comprises a first gas strut disposed to a first side of the cover member and a second gas strut disposed to a second side of the cover member.

Preferably the cover member comprises securing means to secure the cover member in the closed position. More preferably, the securing means comprises latching means. Alternatively the securing means comprises locking means.

The invention will now be described, by way of example only, with reference to the accompanying drawings, in which:-
Figure 1 shows schematically a side view of a storage space to be covered according to the present invention with a cover in a closed position;
Figure 2 shows schematically a side view of the storage space of Figure 1 with the cover in an opened position; and
Figure 3 shows a side section of a detail of an embodiment of a cover for use with the present invention.

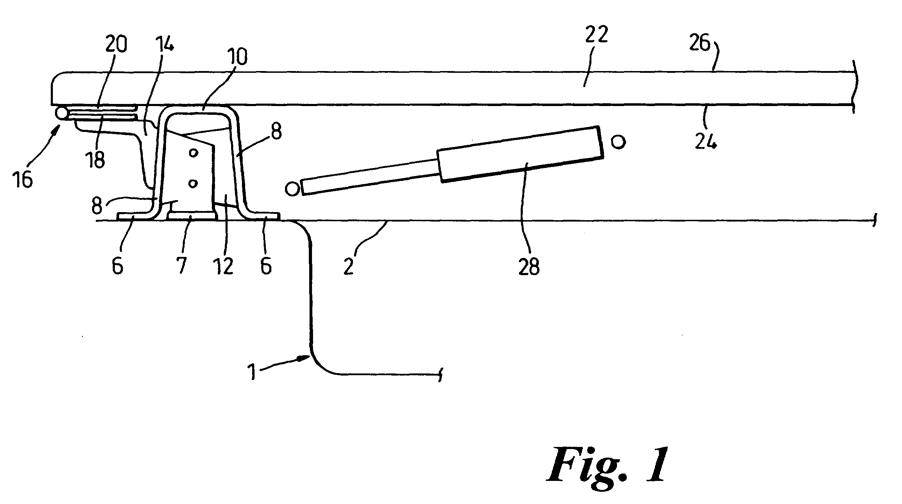

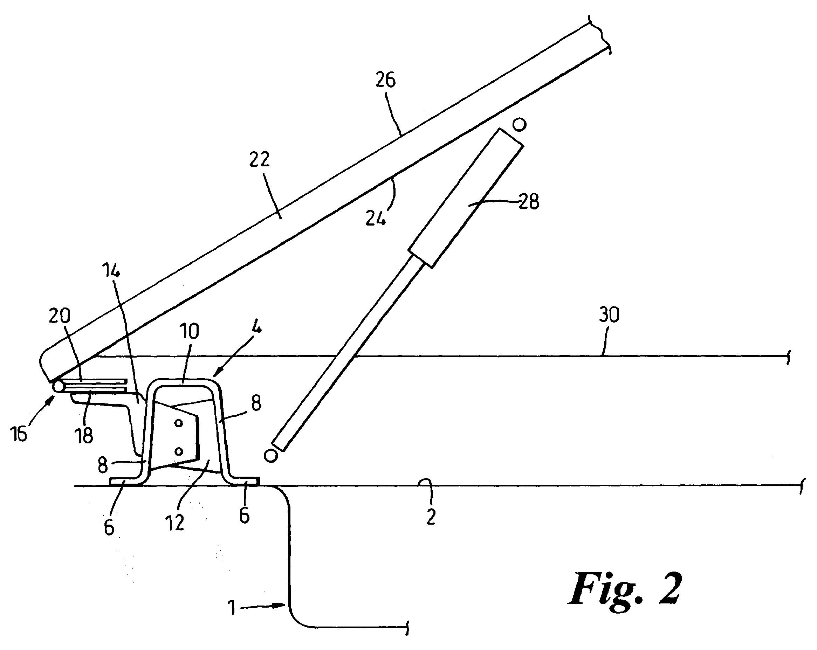

Referring to Figures 1 and 2 there may be seen one embodiment of a storage space to be covered for a motor vehicle interior in accordance with the present invention.

A storage space is defined by a well 1 having a rim 2 about at least a portion of a periphery thereof. The well 1 may be formed integrally with the rim or be joined thereto by any suitable means. For example in the case of a spare wheel well, the well 1 may be formed integrally with a body-in-white structure of a motor vehicle.

The rim 2 itself is recessed with respect to a surrounding portion of the motor vehicle. In other words, the rim 2 forms a shelf about at least a portion of the well. A support bracket 4 is conveniently located on the shelf.

In the illustrated embodiment, the bracket is of generally top hat construction having first and second feet 6 extending from first and second leg members 8, one of the leg members depending from either side of an upper member 10. Tie members 12 are shown extending between the leg members 8 for added strength. Further feet 7 may depend from the tie members 12. The support bracket 4 may be joined to the shelf by welding, by the use of fasteners or by any other suitable means.

In an alternative embodiment (not shown) the first and second brackets 4,14 are omitted. The body-in-white of the vehicle is instead formed locally to provide a mounting surface for the hinge member 16.

A second support bracket 14 extends from one side of the support bracket 4. The second support bracket 14 supports a first leaf 18 of a hinge member 16. The hinge member 16 comprises the first leaf 18 and a second leaf 20. The second leaf 20 of the hinge member is attached to a lower surface 24 of a cover member 22. The cover member 22 is adapted in use to extend over the rim 2 and the well to obscure the rim and the well when in a closed position.

Preferably, an upper surface 26 of the cover member 22 is flush with an upper surface 30 of any adjacent body-in-white or interior trim item of the motor vehicle when the cover member is in the closed position.

The cover member may comprise a board, in which case, the upper surface 26 of the cover member 22 is flush with an upper surface of any adjacent body-in-white and removable interior trim such as carpeting used to cover both the body-in-white and the board.

Alternatively, the cover member 22 may comprise a board, the outer surface of which is provided with a covering of an interior trim item such as carpeting. In this case, the upper surface of the cover member 22 comprises an upper surface of the interior trim item, which is to be flush with a surrounding interior trim when the cover member 22 is in the closed position.

The lower surface 24 of the cover member is adapted to rest on the upper member 10 of the support bracket 4 or body-in-white. Further support means (not shown) may also be provided for the cover member 22 on another part of the storage space.

Biasing means in the form of a gas strut 28 is located between the lower surface of the cover member and the storage space. In the closed position of Figure 1 the gas strut 28 is in compression However, it will be understood in a different configuration the biasing means may be in tension rather than compression. By consideration of the gas strut installation geometry, the gas strut will maintain a closing force on the cover which eliminates free play in the system by acting against any locking mechanism holding the cover member 22 in the closed position, and thus any potential squeak or rattle.

In the illustrated embodiment, the gas strut 28 is secured at a first end to the lower surface 24 and at a second end to a portion of the storage space. The gas strut may be secured by any suitable means.

When the cover member 22 is moved, the gas strut 28 aids in lifting of the cover member 22, the cover member being rotated about an axis defined by the hinge member 16.

Further, when the cover member 22 has been moved to the opened position of Figure 2, the gas strut 28 is able to support the cover member 22 in the opened position enabling an operator to use both hands to manoeuvre any object contained from within the storage space, or, indeed to return any object to the storage space.

Returning the cover member 22 to the closed position is relatively easy in that the bulk of the cover member 22 will aid in compression of the gas strut 28. Also, the use of a gas strut 28 enables controlled closure of the storage space, reducing the danger of fingers or the like becoming trapped between the cover member 22 and the periphery of the storage space.

The cover member 22 may conveniently be provided with securing means (not shown), such as a latching means or a locking means, to secure the cover member 22 in position over the storage space to prevent undesired access to the storage space.

The gas strut provides a holding force by virtue of the installation geometry of the gas strut or struts.

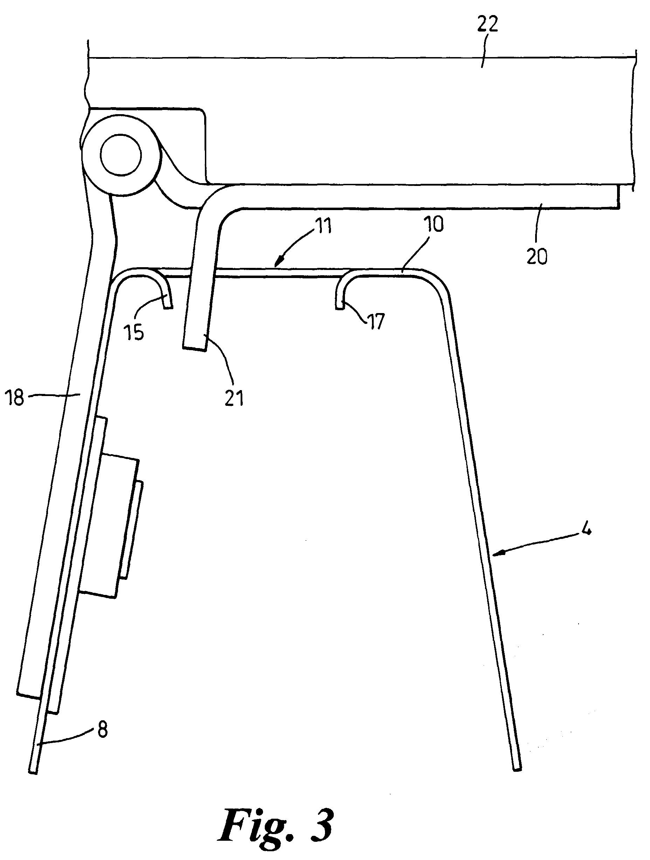

Referring now to Figure 3, a detail of an embodiment of a cover for use with the present invention is shown. Like parts are denoted by like reference numerals.

A cover member 22 is secured to and supported at one end by a second leaf 20 of a hinge member 16. A first leaf 18 of the hinge member is secured to a first support bracket 4. The second leaf of the hinge member is provided with a depending portion 21, which when the cover member 22 is in a closed position, extends through an opening 11 provided in an upper portion 10 of the first support bracket 4. A downwardly depending front flange 17 and a downwardly depending rear flange 15 are shown to the front and rear of the opening 11.

In the event of an impact directed to the rear of the vehicle, the cover is urged away from the area of impact, that is to the left in Figure 3. In such a case, the depending portion 21 of the first hinge leaf will impact upon the rear flange 15 formed on an edge of the opening 11, and subsequently with a leg member 8 depending from the upper member 10 of the support bracket 4.

It will be understood that the forward movement of the cover member towards a passenger cell of the vehicle is undesirable. Accordingly, this feature on the hinge leaf will, in the event of a rear impact, provide a positive stop, preventing the cover member 22 moving towards the front of the vehicle.

## Claims

1. A storage space for a motor vehicle interior, the storage space comprising a well (1) and a cover member (22), the cover member (22) being moveable between a closed position and an opened position relative to the well (1), in which access may be had to the storage space, the storage space being characterised in that biasing means (28) are provided to assist in moving the cover member (22) and to facilitate retention of the cover member (22) in the opened position, the biasing means (28) being biased towards the opened position whereby the bias means is in compression or tension whilst in the closed position.

2. A storage space according to claim 1, characterised in that the biasing means (28) comprises at least one gas strut.

3. A storage space according to claim 1 or claim 2, characterised in that the biasing means (28) comprises a first gas strut disposed to a first side of the cover member and a second gas strut disposed to a second side of the cover member.

4. A storage space according to claim 1, characterised in that the cover member comprises securing means to secure the cover member in the closed position.

5. A storage space according to claim 4, characterised in that the securing means comprises latching means.

6. A storage space according to claim 4, characterised in that the securing means comprises locking means.

7. A storage space according to any previous claim, wherein the cover member (22) is secured to and supported at one end by a first leaf (18) of a hinge member (16), a second leaf (20) of the hinge member (16) being secured to a first support bracket (4,14), the storage space being characterised in that the first leaf (18) of the hinge member (16) is provided with a depending portion, which when the cover member (22) is in a closed position, extends through an opening provided in an upper portion of the first support bracket (4, 14).

8. A storage space according to claim 7, characterised in that the first support bracket (4, 14) is formed integrally with the storage space.

9. A storage space according to any previous claim, characterised in that the means defining the storage space are formed integrally from a vehicle body.
